# EUROPÄISCHE PATENTANMELDUNG

(11) **EP 2 405 240 A2**
(43) Veröffentlichungstag der Anmeldung: **11.01.2012**
(21) Anmeldenummer: 11172314.4
(22) Anmeldetag: 01.07.2011
(51) Int. Cl.: G01D 5/14

(54) **Magnetischer Winkelsensor**

(30) Priorität: 05.07.2010 CH 11082010
(71) Anmelder: Melexis Tessenderlo NV, 3980 Tessenderlo (BE)
(72) Erfinder: Laville, Arnaud, 2000 Neuchatel (CH); Poezart, Mathieu, 2024 Saint-Aubi (CH)
(74) Vertreter: Falk, Urs

(57) **Zusammenfassung**

Ein magnetischer Winkelsensor umfasst einen Halbleiterchip (6), mindestens zwei auf einer Oberfläche des Halbleiterchips angeordnete Magnetfeldkonzentratoren (7, 8) mit einer flächigen Form, und vier Hallsensoren (9 - 12). Jeder Hallsensor ist einem Magnetfeldkonzentrator zugeordnet und umfasst ein Hallelement oder einen Cluster von Hallelementen. Die Hallelemente sind im Halbleiterchip integriert und im Bereich des Randes des zugeordneten Magnetfeldkonzentrators angeordnet, wo sie von Feldlinien des Magnetfelds durchflutet werden, die im Bereich des Randes des Magnetfeldkonzentrators annähernd senkrecht zu der genannten Oberfläche des Halbleiterchips verlaufen. Zwei Hallsensoren bilden ein erstes Sensorpaar zur Messung einer ersten Komponente des Magnetfelds und die anderen zwei Hallsensoren bilden ein zweites Sensorpaar zur Messung einer zweiten Komponente des Magnetfelds. Verbindungslinien (14, 15), die diejenigen Hallsensoren verbinden, die im Bereich des Randes des gleichen Magnetfeldkonzentrators angeordnet sind, verlaufen entweder parallel zueinander oder bilden eine einzige gemeinsame Linie (13).

## Beschreibung

### Die Erfindung betrifft einen magnetischen Winkelsensor.

Eine Anordnung zur berührungslosen Erfassung eines Drehwinkels ist bekannt aus der WO 9616316. Diese Anordnung umfasst als Drehgeber einen um eine Achse drehbaren Permanentmagneten und als Winkelsensor zwei Hallsensoren, die zwei Komponenten des vom Permanentmagneten erzeugten Magnetfeldes in einer senkrecht zur Drehachse liegenden Ebene erfassen. Ein magnetischer Winkelsensor, der sich besonders gut für diese Anwendung eignet, ist bekannt aus der EP 1182461.

Die Erfindung besteht in den im Anspruch 1 angegebenen Merkmalen. Vorteilhafte Ausgestaltungen ergeben sich aus den abhängigen Ansprüchen.

Die Erfindung wird nachfolgend anhand von Ausführungsbeispielen und anhand der Zeichnung näher erläutert. Die Figuren sind nicht massstäblich gezeichnet.
- Fig. 1: zeigt ein System zur berührungslosen Erfassung eines Drehwinkels,
- Fig. 2 - 6: zeigen verschiedene Ausführungsbeispiele von Winkelsensoren, die Hallsensoren und Magnetfeldkonzentratoren umfassen, und
- Fig. 7: illustriert wie die Position der einzelnen Hallsensoren in Bezug auf die Magnetfeldkonzentratoren zu bestimmen ist.

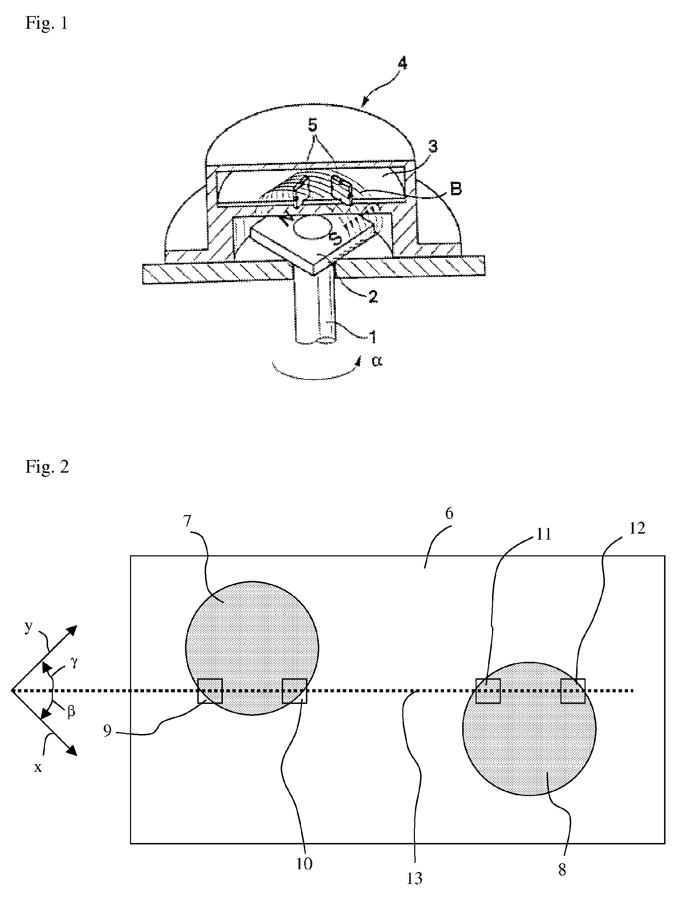

Die Fig. 1 zeigt ein System zur berührungslosen Erfassung eines Drehwinkels α, wie es aus der WO 9616316 bekannt ist. Das System umfasst einen um eine Drehachse 1 drehbaren Permanentmagneten 2 und einen in einer senkrecht zur Drehachse 1 verlaufenden Ebene 3 angeordneten Winkelsensor 4 mit zwei Hallsensoren 5. Die beiden Hallsensoren 5 sind bezüglich der Drehachse 1 auf der Peripherie eines Kreises und im rechten Winkel zueinander angeordnet, so dass sie zwei gegeneinander um 90° gedrehte Komponenten des Magnetfelds B erfassen, die im folgenden als x-Komponente und y-Komponente bezeichnet werden.

Die Fig. 2 zeigt ein erstes Ausführungsbeispiel eines erfindungsgemässen Winkelsensors 4 in Aufsicht. Der Winkelsensor 4 umfasst einen Halbleiterchip 6 und zwei auf einer Oberfläche des Halbleiterchips 6 angeordnete Magnetfeldkonzentratoren 7 und 8 mit einer flächigen Form. Die beiden Magnetfeldkonzentratoren 7 und 8 sind im Abstand zueinander angeordnet und berühren einander nicht. Der Winkelsensor 4 umfasst weiter vier Hallsensoren 9 bis 12. Bei diesem Ausführungsbeispiel ist jeder Hallsensor ein Hallelement. Die Hallelemente sind im Halbleiterchip 6 integriert und im Bereich des entsprechenden Randes der Magnetfeldkonzentratoren 7 und 8 angeordnet, wo sie von Feldlinien des Magnetfelds durchflutet werden, die im Bereich des Randes des jeweiligen Magnetfeldkonzentrators 7 bzw. 8 annähernd senkrecht zu der genannten Oberfläche des Halbleiterchips 6 verlaufen. Die Hallelemente sind empfindlich auf diejenige Komponente des Magnetfeldes, die senkrecht zur Oberfläche des Halbleiterchips 6 verläuft. Der Halbleiterchip 6 enthält auch die für den Betrieb der Hallelemente erforderlichen elektronischen Schaltkreise und die für die Auswertung der von den Hallsensoren gelieferten Messsignale erforderliche Auswerteelektronik, die analoge und digitale Schaltungen umfassen können.

Die Hallsensoren 9 und 11 bilden ein erstes Sensorpaar zur Messung einer ersten Komponente des Magnetfelds, die als x-Komponente bezeichnet wird. Die Hallsensoren 10 und 12 bilden ein zweites Sensorpaar zur Messung einer zweiten Komponente des Magnetfelds, die als y-Komponente bezeichnet wird. Diejenigen Hallsensoren, die zusammen ein Sensorpaar bilden, sind nicht beim gleichen Magnetfeldkonzentrator sondern bei verschiedenen Magnetfeldkonzentratoren angeordnet. So ist der Hallsensor 9 beim Rand des ersten Magnetfeldkonzentrators 7 und der Hallsensor 11 beim Rand des zweiten Magnetfeldkonzentrators 8 angeordnet. Ebenso ist der Hallsensor 10 beim Rand des ersten Magnetfeldkonzentrators 7 und der Hallsensor 12 beim Rand des zweiten Magnetfeldkonzentrators 8 angeordnet. Die Verbindungslinie, die die Hallsensoren 9 und 10 (bzw. die Zentren der Hallsensoren 9 und 10) verbindet, und die Verbindungslinie, die die Hallsensoren 11 und 12 (bzw. die Zentren der Hallsensoren 11 und 12) verbindet, bilden eine einzige gemeinsame Linie 13. Die x-Komponente des Magnetfelds (oder die x-Achse) schliesst mit der Linie 13 einen Winkel von β = -45° ein, die y-Komponente des Magnetfelds (oder die y-Achse) schliesst mit der Linie 13 einen Winkel von γ = +45° ein. Es ist also |β| = |γ| und |β|+ |γ| = 90°. Die x-Komponente und die y-Komponente des Magnetfelds schliessen somit einen Winkel von 90° ein.

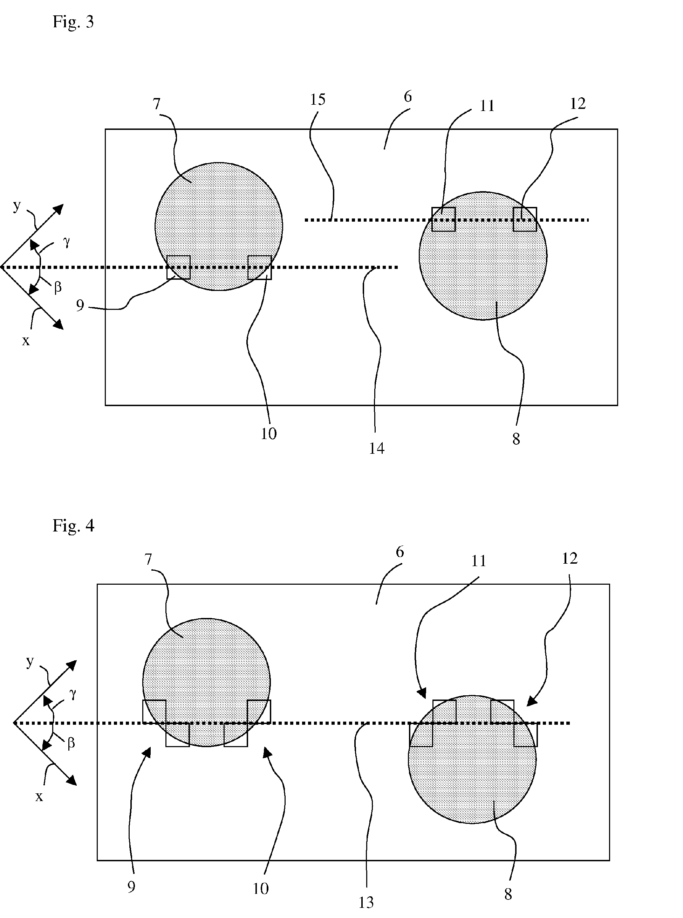

Die Fig. 3 zeigt ein zweites Ausführungsbeispiel eines erfindungsgemässen Winkelsensors 4 in Aufsicht. Der Aufbau dieses Winkelsensors 4 ist sehr ähnlich dem Aufbau des vorhergehenden beschriebenen Winkelsensors, jedoch wurde die relative Lage der Magnetfeldkonzentratoren und der zugehörigen Hallsensoren geändert. Bei diesem Beispiel verlaufen die Verbindungslinie 14, die die Hallsensoren 9 und 10 (bzw. die Zentren der Hallsensoren 9 und 10) verbindet, und die Verbindungslinie 15, die die Hallsensoren 11 und 12 (bzw. die Zentren der Hallsensoren 11 und 12) verbindet, parallel zueinander. Die x-Komponente des Magnetfelds (oder die x-Achse) schliesst mit den Linien 14 und 15 einen Winkel von β = -45° ein, die y-Komponente des Magnetfelds (oder die y-Achse) schliesst mit den Linien 14 und 15 einen Winkel von γ = +45° ein. Es ist also |β| = |γ|und |β| + |γ| = 90°. Die x-Komponente und die y-Komponente des Magnetfelds schliessen somit einen Winkel von 90° ein.

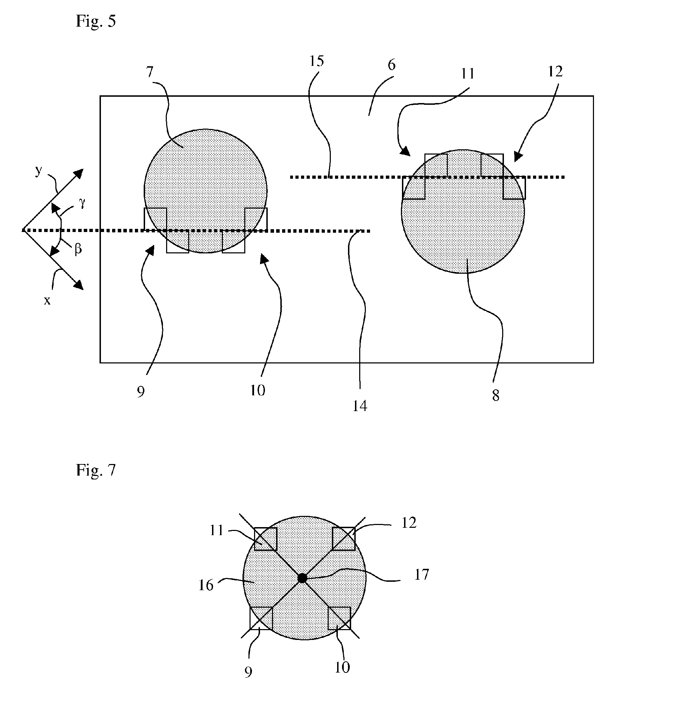

Die Fig. 4 zeigt ein drittes Ausführungsbeispiel eines erfindungsgemässen Winkelsensors 4 in Aufsicht, der gleich aufgebaut ist wie der Winkelsensor gemäss Fig. 2, jedoch mit dem Unterschied, dass die Hallsensoren nicht ein einziges Hallelement, sondern einen Cluster von Hallelementen umfassen. Die Fig. 5 zeigt ein viertes Ausführungsbeispiel eines erfindungsgemässen Winkelsensors 4 in Aufsicht, der gleich aufgebaut ist wie der Winkelsensor gemäss Fig. 3, jedoch mit dem Unterschied, dass die Hallsensoren nicht ein einziges Hallelement, sondern einen Cluster von Hallelementen umfassen. Bei diesen beiden Ausführungsbeispielen umfasst ein Cluster zwei Hallelemente, die in den Figuren als Quadrate dargestellt sind, die sich in einer Ecke berühren. Jedem Cluster von Hallelementen kann geometrisch ein Zentrum zugeordnet werden. Bei diesen Beispielen entspricht das Zentrum dem Punkt, an dem sich die Hallelemente eines Clusters berühren.

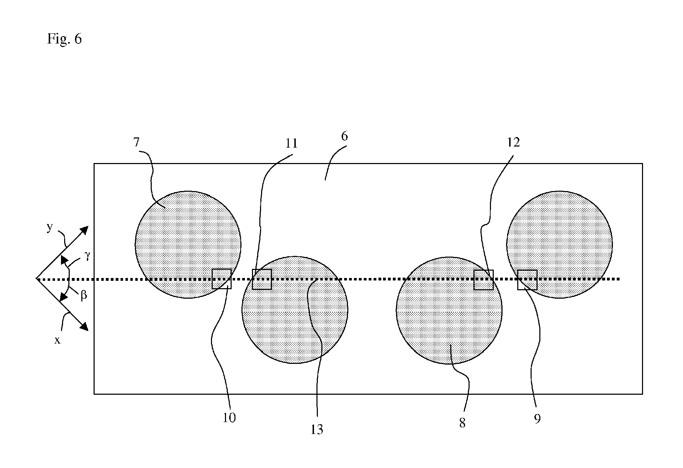

Die Fig. 6 zeigt ein fünftes Ausführungsbeispiel eines erfindungsgemässen Winkelsensors 4 in Aufsicht. Bei diesem Ausführungsbeispiel sind vier Magnetfeldkonzentratoren vorhanden, wobei jedem Magnetfeldkonzentrator ein Hallsensor zugeordnet ist. Der Abstand zwischen den Magnetfeldkonzentratoren kann beliebig gross sein. Die vier Hallsensoren 9 bis 12 liegen auf einer gemeinsamen Linie. Es ist auch möglich, die einzelnen Magnetfeldkonzentratoren inklusive dem zugeordneten Hallsensor parallel oder senkrecht zur Linie 13 zu verschieben.

Die Magnetfeldkonzentratoren sind wie dargestellt bevorzugt kreisförmig und somit auch scheibenförmig.

Die Fig. 7 dient zur Illustration, wie sich die Lage der einzelnen Hallsensoren 9 bis 12 in Bezug auf die Magnetfeldkonzentratoren bestimmt. Wenn alle Magnetfeldkonzentratoren, hier dargestellt durch eine Scheibe mit dem Bezugszeichen 16, inklusive der im Bereich ihres Randes angeordneten Hallsensoren 9 bis 12 übereinander gelegt werden, dann ergibt sich das Bild der Fig. 7. Die Hallsensoren 9 bis 12 sind bezüglich des Zentrums 17 der kreisförmigen Magnetfeldkonzentratoren winkelmässig um 90° zueinander versetzt.

## Patentansprüche

1. Magnetischer Winkelsensor, umfassend
- einen Halbleiterchip (6),
- mindestens zwei auf einer Oberfläche des Halbleiterchips angeordnete Magnetfeldkonzentratoren (7, 8) mit einer flächigen Form, wobei die Magnetfeldkonzentratoren im Abstand zueinander angeordnet sind, und
- vier Hallsensoren (9 - 12), wobei jeder Hallsensor einem der mindestens zwei Magnetfeldkonzentratoren zugeordnet ist und ein Hallelement oder einen Cluster von Hallelementen umfasst, wobei die Hallelemente im Halbleiterchip integriert und im Bereich des Randes des zugeordneten Magnetfeldkonzentrators angeordnet sind, wo sie von Feldlinien des Magnetfelds durchflutet werden, die im Bereich des Randes des Magnetfeldkonzentrators annähernd senkrecht zu der genannten Oberfläche des Halbleiterchips verlaufen, wobei zwei Hallsensoren ein erstes Sensorpaar zur Messung einer ersten Komponente des Magnetfelds und wobei die anderen zwei Hallsensoren ein zweites Sensorpaar zur Messung einer zweiten Komponente des Magnetfelds bilden, und wobei Verbindungslinien (14, 15), die diejenigen Hallsensoren verbinden, die im Bereich des Randes des gleichen Magnetfeldkonzentrators angeordnet sind, entweder parallel zueinander verlaufen oder eine einzige gemeinsame Linie (13) bilden.

2. Magnetischer Winkelsensor nach Anspruch 1, **dadurch gekennzeichnet, dass** die Magnetfeldkonzentratoren kreisförmig sind.

3. Magnetischer Winkelsensor nach Anspruch 1 oder 2, **dadurch gekennzeichnet, dass** die erste Komponente des Magnetfelds und die besagten Verbindungslinien einen Winkel von -45° einschliessen und dass die zweite Komponente des Magnetfelds und die besagten Verbindungslinien einen Winkel von 45° einschliessen.
